# DEMANDE DE BREVET EUROPEEN

(11) **EP 0 870 601 A2**
(43) Date de publication de la demande: **14.10.1998**
(21) Numéro de dépôt: 97400822.9
(22) Date de dépôt: 10.04.1997
(51) Int. Cl.: B32B 17/06, C03C 17/36

(54) **Vitrage thermiquement isolant à basse émissivité**

(30) Priorité: 10.04.1997 DE 29606493 U
(71) Demandeur: SAINT-GOBAIN VITRAGE, 92400 Courbevoie (FR)
(72) Inventeur: Häussler, Wulf, 52477 Alsdorf (DE); Villari, Valentino, 41372 Niederkrüchten (DE); Schicht, Heinz, 06925 Bethau (DE)
(74) Mandataire: Renous Chan, Véronique

(57) **Abrégé**

L'invention a pour objet un vitrage thermiquement isolant pourvu d'un empilement de couches présentant une basse émissivité, une haute transmission dans le domaine visible du spectre, ainsi qu'un aspect neutre en transparence et en réflexion, cet empilement comportant une succession de couches disposées dans l'ordre suivant : SnO₂ - ZnO - Ag - métal sacrificiel - SnO₂. Cet empilement présente, en commençant par la surface du verre, la structure ci-dessous, dont les couches possèdent, de préférence les épaisseurs suivantes :

| | |
|---|---|
| SnO₂ | 18 à 22 nm |
| ZnO | 16 à 22 nm |
| Ag | 10 à 13 nm |
| Ni-Cr (80/20) | 2 à 5 nm |
| SnO₂ | 38 à 42 nm |

## Description

L'invention a trait à un vitrage thermiquement isolant possédant un ensemble de couches qui présentent une basse émissivité, de préférence une haute transmission dans le domaine visible du spectre lumineux, ainsi qu'un aspect neutre en transparence et en réflexion, ces couches successives étant respectivement composées des matériaux ci-dessous et disposées dans l'ordre suivant : oxyde d'étain - oxyde de zinc - argent - métal sacrificiel - oxyde d'étain.

Les vitrages pourvus d'un empilement de couches minces et thermiquement isolant présentant une basse émissivité sont tout particulièrement employés comme vitrages d'isolation thermique. Pour une structure de vitre isolante donnée, le coefficient de transmission thermique est essentiellement déterminé par le pouvoir émissif des deux surfaces intérieures des verres, qui, disposées face à face, délimitent l'interstice présent dans le vitrage. Ce pouvoir émissif, également appelé émissivité et désigné par la lettre ε, est relativement élevé pour une surface de verre dépourvue de tout revêtement. Il se monte en effet à environ 0,85. L'emploi de vitrages possédant un revêtement à faible émission et présentant une émissivité ε inférieure ou égale à 0,7 sur le côté tourné vers l'interstice empli de gaz permet de stopper quasi-totalement l'échange de rayonnement entre les surfaces de verre. Il devient donc possible de produire de cette manière des vitrages isolants dont le coefficient K (coefficient de transfert thermique calculé selon la norme ISO 10292) est égal, voire inférieur à 1,3 W/m²K, ce qui permet d'effectuer d'importantes économies d'énergie. Hormis une faible valeur de K, un vitrage isolant aux qualités optimales doit également posséder une capacité de transmission d'énergie globale (ou valeur g) aussi haute que possible, afin que l'utilisation passive de l'énergie solaire soit importante et donc que le bilan énergétique d'un bâtiment soit favorable. En outre, la couleur de réflexion de ce vitrage vers l'extérieur se doit d'être neutre, comme pour les vitrages isolants conventionnels.

Un tel vitrage présentant une succession de couches telle que celle mentionnée plus haut figure déjà dans le brevet DE-A1-39 41 027. Ce vitrage connu contient, dans l'ordre les couches suivantes : 15 nm de SnO₂ ; 14 nm de ZnO ; 12 nm d'Ag - 10 nm d'acier inoxydable à convertir en oxyde ; 14 nm de SnO₂ ; 10 nm de TiO₂. Ce vitrage est destiné à être utilisé comme vitrage de véhicule automobile pourvu d'un chauffage électrique. La combinaison de couches devra par conséquent présenter une haute conductivité électrique et une grande résistance thermique afin de pouvoir supporter le procédé de bombage et/ou de trempe des substrats verriers. Pendant l'échauffement des substrats de verre portés à une température leur permettant d'être bombés/trempés, cet échauffement précédant le processus de bombage/trempe, la couche de métal sacrificiel est convertie dans une large mesure en une couche d'oxyde métallique qui protège la couche d'argent de l'oxygène susceptible de s'infiltrer. Sur la couche supérieure d'oxyde d'étain a été disposée une autre couche composée de dioxyde de titane, censée permettre d'augmenter la résistance du vitrage à l'abrasion. Cette combinaison de couches connue nécessite entre outre que la couche d'oxyde de zinc située sous la couche d'argent présente une épaisseur de 15 nm maximum.

Un vitrage pourvu de cette structure de couches connu présente des propriétés intéressantes pour l'utilisation prévue comme vitrage chauffant de véhicule automobile. Cependant, pour l'emploi comme vitrage thermiquement isolant dans le secteur du bâtiment, il ne présente ni la haute transmission souhaitée dans le domaine visible du spectre, ni une émissivité optimale.

L'invention a pour objectif de perfectionner la structure de l'empilement de couches mentionné plus haut, de manière à réaliser un vitrage thermiquement isolant pourvu de propriétés particulièrement favorables à son utilisation dans le secteur du bâtiment, ce vitrage présentant une haute transmission lumineuse, supérieure à 80%, une haute neutralité de couleur en transmission et en réflexion, une basse émissivité inférieure ou égale à 0,05, ainsi qu'une haute capacité de transmission d'énergie globale.

Cet objectif peut être atteint en conformité avec l'invention, dans la mesure où la couche multiple présente, en commençant par la surface du substrat de type verre, la structure ci-dessous comportant la séquence de couches dont les épaisseurs sont les suivantes :

| | |
|---|---|
| SnO₂ | 10 à 30 nm, notamment 18 à 22 nm |
| ZnO | 16 à 30 nm, notamment 16 à 22 nm |
| Ag | 7 à 15 nm, notamment 10 à 13 nm |
| Ni-Cr (80/20) | 0,5 à 5 nm, notamment 2 à 5 nm |
| SnO₂ | 30 à 50 nm, notamment 38 à 42 nm |

De manière plus générale, l'invention concerne un empilement de couches comprenant au moins une couche réfléchissant les rayons infrarouges du type couche en argent disposée entre deux revêtements à base de matériau diélectrique, avec de préférence au moins entre ladite couche et le revêtement de matérieu diélectrique supérieur (le plus éloigné de la surface du substrat porteur de l'empilement), une couche 〈〈sacrificielle〉〉 déposée sous forme métallique et susceptible de s'oxyder au moins partiellement lors du dépôt des matériaux diélectriques supérieurs, tout particulièrement quand ils sont à base d'oxyde.

Sous la couche réfléchissante, on prévoit avantageusement un revêtement en matériau diélectrique 〈〈multicouches〉〉 comprenant la séquence SnO₂/ZnO ou Nb₂O/ZnO ou Ta₂O₅/ZnO ou WO₃/ZnO ou Sb₂O₅/ZnO. Avantageusement, on prévoit selon l'invention une épaisseur significative en ZnO, qui aurait un effet particulièrement bénéfique sur la qualité de dépôt de la couche réfléchissante. L'épaisseur de ZnO peut ainsi être d'au moins 16 nm, notamment de 16 à 30 nm. L'épaisseur de la ou des couches en matériau diélectrique sous la couche de ZnO est réglée de manière à ce que l'épaisseur totale géométrique du revêtement 〈〈inférieur〉〉 (entre couche réfléchissante et substrat porteur) soit par exemple comprise entre 30 et 70 nm. Ce revêtement 〈〈inférieur〉〉 peut aussi comporter une couche à base de Si₃N₄, en plus ou à la place des couches d'oxyde sous-jacentes au ZnO.

Si l'on utilise une couche déposée sous forme métallique dite 〈〈sécrificielle〉〉 sur l'argent, celle-ci peut être choisie parmi l'un au moins des métaux suivants : nickel, chrome, alliage nickel-chrome, tantale, niobium, zinc, palladium, zirconium. Son épaisseur est modulable, notamment comprise entre 0,5 nm et 5 nm. Elle est généralement d'environ 1 à 2 nm.

Le revêtement diélectrique 〈〈supérieur〉〉 peut être monocouche ou multicouches, et notamment comporter au moins une couche de l'un des oxydes suivants : SnO₂, ZnO, Ta₂O₅, Nb₂O₅, WO₃, Sb₂O₅, TiO₂. Chacune des couches ou la couche, si elle est unique, peut aussi être en un mélange d'au moins deux de ces oxydes. Le revêtement peut aussi comporter des matériaux diélectriques du type Si₃N₄. L'épaisseur géométrique totale du revêtement 〈〈supérieur〉〉 peut être choisie dans la même gamme que pour le revêtement 〈〈inférieur〉〉.

On peut aussi choisir de 〈〈dédoubler〉〉 les empilements précités, en utilisant non pas une, mais deux couches d'argent, le revêtement 〈〈 supérieur 〉〉 de la couche réfléchissante la plus proche du substrat porteur constituant le revêtement 〈〈inférieur〉〉 de la seconde, notamment.

La ou chacune des couches réfléchissantes du type argent a une épaisseur de préférence choisie entre 7 et 15 nm, notamment autour de 10-12 nm.

On applique donc l'invention essentiellement à la fabrication de vitrages multiples du type double ou triple vitrage. Avantageusement, au moins une des faces de l'un des substrats transparents du type verre constituant le vitrage est munie de l'empilement précédemment décrit. Pour un effet optimum, on peut prévoir que toutes les faces des substrats de type verriers tournés du côté de la (des) lame(s) de gaz intercalaire(s) soient pourvues de ce type d'empilement.

Avec l'invention, on peut réaliser des vitrages multiples, par exemple des double-vitrages dont la T_{L} dépasse 75 et même 80%, et dont l'émissivité est inférieure à 0,1 et même à 0,05 : les vitrages selon l'invention concilient haute transparence et hautes performances sur le plan thermique.

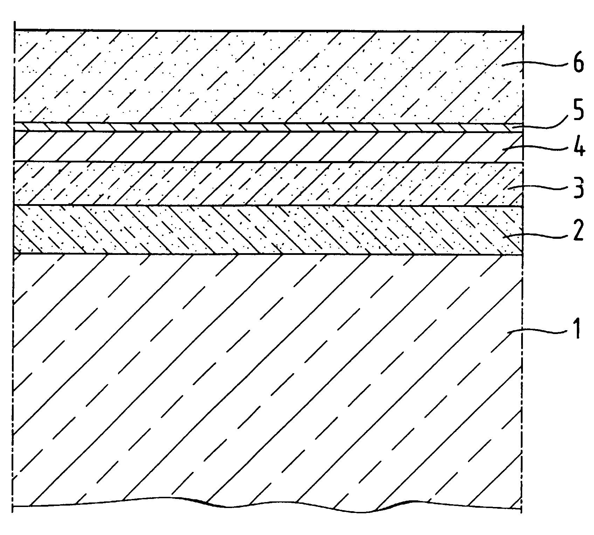

L'invention sera décrite ci-après de manière plus détaillée à l'aide d'un mode de réalisation précis non limitatif, illustré par la figure 1 représentant en coupe un substrat muni de l'empilement de couches (les proportions sont non respectées pour en faciliter la lecture.

Une structure en couches possédant ces propriétés avantageuses présente pour chacune des couches les épaisseurs suivantes :

| | |
|---|---|
| SnO₂ | 20 nm |
| ZnO | 17 nm |
| Ag | 11 nm |
| Ni-Cr (80/20) | 4 nm |
| SnO₂ | 40 nm |

Un vitrage possédant cette structure de couches est représenté dans la figure annexée. Le vitrage 1 est, par exemple, constitué de verre flotté et présente une épaisseur de 4 mm. On dispose toute d'abord sur l'une des faces du verre flotté 1 la couche de diélectrique 2, constituée d'oxyde d'étain et épaisse de 20 nm, la couche diélectrique 3 d'oxyde de zinc de 17 nm d'épaisseur étant placée sur cette couche d'oxyde d'étain. La couche d'argent 4, épaisse de 11 nm, se trouve directement sur la couche d'oxyde de zinc. Sur cette couche d'argent est disposée la couche de métal sacrificiel, en Ni-Cr, épaisse de 4 nm, sur laquelle est à son tour déposée la couche diélectrique 6 en oxyde d'étain, dont l'épaisseur se monte à 40 nm.

La réalisation de cet empilement de couches se fait de manière connue, selon le procédé de pulvérisation cathodique assistée par champ magnétique, dans une unité industrielle de production en continu, avec un nombre correspondant de zones cathodiques, les couches d'oxyde étant obtenues, comme c'est généralement l'habitude, par pulvérisation cathodique réactive, avec un gaz contenant de l'oxygène et à partir de cibles métalliques. Il convient en outre de veiller lors de l'exécution du procédé de dépôt, à ce que les paramètres de ce dernier soient déterminés et réglés de manière à obtenir les épaisseurs de couches souhaitées. On utilise un alliage de nickel/chrome, dans les proportions en poids respectives suivantes :
Ni = 80%
Cr = 20%,
pour la couche de métal sacrificiel. (La proportion de Cr peut être plus importante et atteindre jusqu'à 80% de l'alliage en poids).

Les mesures optiques effectuées sur un verre flotté, présentant une épaisseur de 4 nm et pourvu d'un revêtement constitué d'une structure de couches avantageuses selon l'invention, ont permis d'obtenir les valeurs suivantes :
ε (émissivité) : 0,04 (inférieur à 0,1, de préférence inférieure à 0,05)
T_{L} (transmission de la lumière visible) selon DIN 67507 : 82,5% (de préférence entre 75 et 85%).

Un vitrage isolant réalisé à partir de deux feuilles de verre flotté ainsi pourvues de revêtements et comportant un interstice large de 16 mm empli de gaz argon, vitrage pour laquelle les surfaces du verre pourvues de revêtements sont tournées vers l'interstice contenant le gaz, présente une valeur g selon la norme DIN 67507 de 58% et une valeur K selon la norme DIN 52612 de 1,1 W/m²K.

## Revendications

1. Vitrage thermiquement isolant pourvu d'un empilement de couches présentant une basse émissivité, une haute transmission dans le domaine visible du spectre, ainsi qu'un aspect neutre en transparence et en réflexion, cet empilement comportant une succession de couches disposées dans l'ordre suivant : SnO₂ - ZnO - Ag - métal sacrificiel - SnO₂, ***caractérisé en ce que*** l'empilement présente, en commençant par la surface du substrat de type verre, la structure ci-dessous, dont les couches possèdent, de préférence les épaisseurs suivantes :
| | |
|---|---|
| SnO₂ | 10 à 30 nm |
| ZnO | 16 à 30 nm |
| Ag | 7 à 15 nm |
| Ni-Cr (80/20) | 0,5 à 5 nm |
| SnO₂ | 30 à 50 nm |

2. Vitrage thermiquement islant selon la revendication 1, ***caractérisé en ce que*** les différentes couches de l'empilement présentent les épaisseurs suivantes :
| | |
|---|---|
| SnO₂ | 20 nm |
| ZnO | 17 nm |
| Ag | 11 nm |
| Ni-Cr (80/20) | 4 nm |
| SnO₂ | 40 nm |

3. Vitrage multiple du type double ou triple vitrage, à faible émissivité et haute transmission lumineuse, ***caractérisé en ce qu***'au moins un de ses substrats transparents constitutifs du type substrat verrier est muni sur sa face tournée vers la lame de gaz d'un empilement de couches minces comprenant une couche réfléchissante du type couche métallique à base d'argent, disposée entre un revêtement diélectrique 〈〈 inférieur 〉〉 et un revêtement diélectrique 〈〈 supérieur 〉〉, le revêtement diélectrique 〈〈 inférieur 〉〉 comprenant une couche de ZnO d'au moins 16 nm de préférence en contact direct avec la couche réfléchissante.

4. Vitrage selon la revendication 3, ***caractérisé en ce que*** le revêtement diélectrique 〈〈 inférieur 〉〉 associe à la couche de ZnO au moins une couche d'oxyde du type SnO₂, Nb₂O₅, Ta₂O₅, WO₃, Sb₂O₅ et/ou Si₃N₄.

5. Vitrage selon la revendication 3 ou la revendication 4, ***caractérisé en ce que*** la couche réfléchissante est munie d'une couche sacrificielle métallique au moins partiellement oxydée et choisie à partir d'au moins un des métaux du type Ni, Cr, Zn, Pd, Zr, Nb, d'épaisseur de préférence comprise entre 0,5 et 5 nm.

6. Vitrage selon l'une des revendications 3 à 5, ***caractérisé en ce que le*** revêtement diélectrique 〈〈 supérieur 〉〉 comprend au moins une couche à base d'au moins un des oxydes suivants : SnO₂, ZnO, Ta₂O₅, Nb₂O₅, WO₃, Sb₂O₅, TiO₂ et/ou de Si₃N₄.

7. Vitrage selon l'une des revendications 3 à 6, ***caractérisé en ce que*** l'empilement comprend deux couches réfléchissantes du type couche d'argent.

8. Vitrage selon l'une des revendications 3 à 7, caractérisé en ce que l'empilement comprend la séquence de couches SnO₂/ZnO/Ag/Ni-Cr/SnO₂.

9. Vitrage selon l'une des revendications 1 à 8, ***caractérisé en ce que*** chacune des faces des substrats tournées vers la (les) lame(s) de gaz intercalaire(s) est (sont) munie(s) dudit empilement de couches minces.

10. Vitrage selon l'une des revendications 1 à 9, ***caractérisé en ce qu'***il présente une valeur de transmission lumineuse T_{L} supérieure à 75%, notamment supérieure à 80% et une émissivité inférieure à 0,1, notamment inférieure à 0,05.
